# EUROPEAN PATENT SPECIFICATION

(11) **EP 3 458 689 B1**
(45) Date of publication and mention of the grant of the patent: **08.09.2021**
(21) Application number: 17727446.1
(22) Date of filing: 17.05.2017
(51) Int. Cl.: F01N 3/022, F01N 3/025, F01N 9/00, C10L 1/12

(54) **POROUS CERAMIC FILTERS AND METHODS FOR FILTERING**
PORÖSE KERAMISCHE FILTER UND VERFAHREN ZUR FILTERUNG
FILTRES CÉRAMIQUES POREUX ET PROCÉDÉS DE FILTRATION

(30) Priority: 17.05.2016 US 201662337552 P
(43) Date of publication of application: 27.03.2019
(73) Proprietor: Corning Incorporated, Corning, New York 14831 (US)
(72) Inventor: ROSE, Dominik, D-63067 Offenbach (DE)
(74) Representative: Sturm, Christoph
(86) International application number: PCT/US2017/033124
(87) International publication number: WO 2017/201171

(56) References cited:
- EP-A1- 1 411 108
- EP-A1- 3 510 262
- WO-A1-2012/084838
- WO-A1-2012/123540
- FR-A1- 2 771 449
- US-A1- 2010 266 461
- US-A1- 2016 123 201

## Description

### CROSS-REFERENCE TO RELATED APPLICATIONS

This application claims the benefit of priority of U.S. Provisional Application Serial No. 62/337,552 filed on May 17, 2016.

### FIELD OF THE DISCLOSURE

The disclosure relates generally to particulate filters and methods of filtering particulate matter from a fluid stream. More specifically, the disclosure relates to porous ceramic filters for removing particulates from engine exhaust streams.

### BACKGROUND

Environmental concerns have motivated the implementation of emission requirements for internal combustion engines throughout much of the world. While catalytic converters have served to eliminate many of the pollutants present in exhaust gas, a filter is often also used to remove particulate matter from the exhaust stream. Wall-flow particulate filters, such as porous ceramic honeycomb filters, have been used as filters for engine exhaust streams. However, emission regulations are becoming increasingly stringent as legislative awareness of the impact of automotive emissions on the environment is heightened. Thus, a need exists for improved filters and methods of filtering.

Prior art is disclosed by US 2016/0123201 A1.

Additional prior art is disclosed by FR 2 771 449 A1, by WO 2012/123540 A1, by WO 20212/084838 A1 and by EP 1 411 108 A1, US 2010/266461 A1.

### SUMMARY

The invention provides a use of a fuel additive for accelerating ash loading of a particulate filter according to claim 1.

According to various embodiments, the fuel source may comprise diesel fuel or gasoline fuel. A volume of the fuel source can range, for example, from about 1 liter to about 500 liters, e.g., from about 30 liters to about 150 liters. According to claim 1, the fuel source comprises a fuel supply combined with at least one fuel additive, which may be present in a volumetric ratio ranging from 1:25 to 1:500, relative to the volume of the fuel supply. In certain embodiments, the fuel additive comprises at least one inorganic component containing at least one element selected from the group consisting of Si, Al, Sn, Zn, Ti, Ce, Fe, Ca, Mn, Mg, Pb, Sr, V, Y, Zr, Cr, Mo, W, Co, Cu, Sn, Pr, and combinations thereof.

Exemplary porous ceramic structures can comprise ceramic honeycombs comprising a plurality of channels separated by a plurality of porous interior walls. Ash produced by the combustion of the fuel additive may be deposited on at least a portion of a surface of the porous ceramic structure, e.g., as a membrane on an outer surface or interior channel surface. In some embodiments, ash is deposited in a concentration of at least about 10 mg/L, such as at least about 30 mg/L or at least about 50 mg/L, based on the total volume of the porous ceramic structure. Prior to deposition of ash produced by combustion of the fuel additive, an initial ash concentration of the porous ceramic structure may be about 0 mg/L, e.g., a "clean" filter. Ash components can include, but are not limited to, oxides, sulfates, carbonates, and/or phosphates of Si, Al, Zn, Ti, Ce, Fe, Ca, Mn, Mg, Pb, Sr, V, Y, Zr, Cr, Mo, W, Co, Cu, Sn, Pr, and combinations thereof. According to various embodiments, the porous ceramic structures may be coated with at least one catalyst prior to ash deposition.

Also disclosed herein are vehicles comprising particulate filtration systems. Such vehicles include an internal combustion engine (fuel burner) for combusting a fuel (e.g., diesel or gasoline) comprising a fuel additive (fuel source) and a porous ceramic structure for filtering particulate matter. In some embodiments, the fuel source may comprise an initial fuel supply to the vehicle. After an initial "break-in" period, e.g., after a driving distance of about 3000 km or less or an engine operation period of less than about 72 hours, an inorganic membrane comprising at least about 10 mg/L of ash may be formed on at least a portion of a surface of the porous ceramic structure, such as at least about 30 mg/L or at least about 50 mg/L, relative to the total volume of the porous ceramic structure. In some embodiments, after a break-in period of about 3000 km or less, e.g., ranging from about 100 km to about 1000 km, a particulate number filtration efficiency (PNFE) of the porous ceramic structure may be greater than about 80%, such as greater than about 90%.

Methods for filtering particulates from a fluid are further provided, the methods comprising flowing the fluid through a particulate filtration system as disclosed herein. Still further disclosed herein are methods for conditioning a particulate filter, the methods comprising placing a porous ceramic structure in fluid connection with a fuel burner; supplying a fuel source comprising at least one fuel additive to the fuel burner; combusting the fuel source; and passing an exhaust stream comprising particulate matter from the fuel burner through the porous ceramic structure, wherein the at least one fuel additive comprises at least one inorganic component that produces ash upon combustion, and wherein the at least one fuel additive is capable of producing at least about 10 mg of ash per liter of fuel burned, such as at least about 30 mg or at least about 50 mg of ash per liter of fuel burned. Exemplary methods can include conditioning the porous ceramic structure upon installation in a vehicle, e.g., by including at least one fuel additive in an initial fuel supply for the vehicle, or pre-conditioning the porous ceramic structure prior to installation in the vehicle.

Further disclosed herein are vehicular systems comprising an engine and an engine exhaust treatment subsystem comprising a filter, wherein the filter comprises ash at an ash loading of at least about 10 mg/L based on a total volume of the filter, the ash comprising an inorganic residue of a fuel additive, and wherein the filter has been exposed to exhaust from the engine for less than 72 hours of engine operation. Exhaust filtration systems comprising a filter are also disclosed, the filter comprising ash at an ash loading of at least about 10 mg/L based on a total volume of the filter, the ash comprising an inorganic residue of a fuel additive, wherein the filter has been exposed to exhaust from an engine for less than 72 hours of engine operation. Still further disclosed herein are methods of supplying filters to a vehicle manufacturer or to an engine exhaust system manufacturer, the methods comprising conditioning a filter by accelerating ash loading in the filter.

Additional features and advantages of the disclosure will be set forth in the detailed description which follows, and in part will be readily apparent to those skilled in the art from that description or recognized by practicing the methods as described herein, including the detailed description which follows, the claims, as well as the appended drawings.

It is to be understood that both the foregoing general description and the following detailed description present various embodiments of the disclosure, and are intended to provide an overview or framework for understanding the nature and character of the claims. The accompanying drawings are included to provide a further understanding of the disclosure, and are incorporated into and constitute a part of this specification. The drawings illustrate various embodiments of the disclosure and, together with the description, serve to explain the principles and operations of the disclosure.

### BRIEF DESCRIPTION OF THE DRAWINGS

The following detailed description can be further understood when read in conjunction with the following drawings in which, where possible, like numerals are used to refer to like elements, and:
**FIGS. 1A-B** illustrate exemplary porous ceramic honeycomb structures;
**FIG. 2** illustrates an exemplary particulate filtration system according to various embodiments of the disclosure;
**FIG. 3** illustrates a vehicle comprising a particulate filtration system according to certain embodiments of the disclosure;
**FIG. 4** is a graphical plot illustrating filtration efficiency evolution for exemplary filters operated in vehicles running different driving cycles;
**FIG. 5** is a graphical plot illustrating filtration efficiency as a function of driving distance;
**FIG. 6** is a graphical plot illustrating filtration efficiency as a function of the volume of consumed fuel additive;
**FIG. 7** is a graphical plot illustrating a thermogravimetric analysis of an exemplary fuel additive; and
**FIG. 8** is a graphical plot illustrating filtration efficiency as a function of the volume of consumed fuel additive additives having different ash contents.

### DETAILED DESCRIPTION

### Filtration Articles

Particulate number (PN) emission regulations for gasoline and diesel engines have been tightly set in many countries and diesel particulate filters (DPFs) or gasoline particulate filters (GPFs) with high PN filtration efficiency (PNFE), e.g., on the order of 70-90% PNFE, are needed to successfully manufacture and sell vehicles in compliance with current and/or future environmental regulations. Over the life of a filter, a layer of ash or soot may naturally form on the filter, which can improve the PNFE of the filter over time. The gradual buildup of this membrane is often referred to as "ash conditioning" and may be related to the consumption of inorganic additives in the oil used to lubricate the engine or, in certain circumstances, the addition of a fuel borne catalyst (FBC) to the fuel supply. However, ash conditioning is a relatively slow process, which can require running the engine for thousands of kilometers before a sufficient membrane is formed. Moreover, the consumption of lubricant (oil) from engine to engine is highly variable and can be difficult to predict.

In some countries, engines are allowed a "break-in" period of up to 3000 km before the vehicle is tested for certification or compliance with the regulated limits. Original equipment manufacturers (OEMs) can apply for an evolution factor that "corrects" the initial emissions of the engine (e.g., as it leaves the assembly line at 0 km), considering the anticipated improvements over the initial break-in period. However, as noted above, oil consumption can vary for different vehicles and/or driving conditions, making it difficult to predict the ultimate PNFE of the filter after the break-in period, even for vehicles of the same make and model.

An alternative solution for circumventing the ash conditioning period is to manufacture a filter that has an initially high PNFE. Filters with high initial PNFE typically employ internal walls (or webs) that are thicker and/or have smaller pores. However, such filter designs may have a negative impact on pressure drop across the filter and/or may interfere with catalyst coating of the filter.

Filtration articles disclosed herein can include any articles known in the art for removing particles from fluid streams, such as vehicle exhaust streams. For instance, fluid streams may comprise gases, vapors, or liquids, and the particulates may comprise a separate phase in the fluid, such as solid particulates in a gas or liquid stream, or droplets of liquid in a gas stream, and the like. Particulates can thus include soot, ash, dust, aerosolized liquids, and any other variety of particulate contaminant present in any given fluid. As used herein the term "soot" is intended to refer to carbon particles that result from the incomplete combustion of hydrocarbons during the internal combustion process. The term "ash" is intended to refer to non-combustible materials, e.g., inorganic or metallic materials, that may be found in various petroleum products, such as lubricants and fuel borne catalysts (FBCs).

In some embodiments, the filtration articles can comprise porous ceramic structures. A "porous" ceramic as disclosed herein can include any ceramic structure having a porosity of at least about 40%, such as about 45%, 50%, 55%, 60%, 65%, 70%, 75%, 80%, 85%, or greater. The porous ceramic structure is not limited in shape, size, pore size, pore distribution, and/or pore number. For example, a porous ceramic structure can have any desired 3-dimensional shape, such as a cube, block, pyramid, cylinder, sphere, or the like, with any suitable width, length, height, and/or diameter. In various embodiments, a porous ceramic structure may be formed as a monolithic structure, for example, via extruding and/or molding techniques. Those having ordinary skill in the art are familiar with the various techniques for forming such ceramic monolithic structures.

Porous ceramic structures may also have any variety of configurations and designs including, but not limited to, flow-through monolith, wall-flow monolith, or partial-flow monolith structures. Exemplary flow-through monoliths include any structure comprising channels, porous networks, or other passages through which fluid can flow from one end of the structure to the other. Exemplary wall-flow monoliths include, for example, any monolithic structure comprising channels or porous networks or other passages which may be open or plugged at opposite ends of the structure, thereby directing fluid flow through the channel walls as it flows from one end of the structure to the other. Exemplary partial-flow monoliths can include any combination of a wall-flow monolith with a flow-through monolith, e.g., having some channels or passages open on both ends to permit the fluid to flow through the channel without blockage.

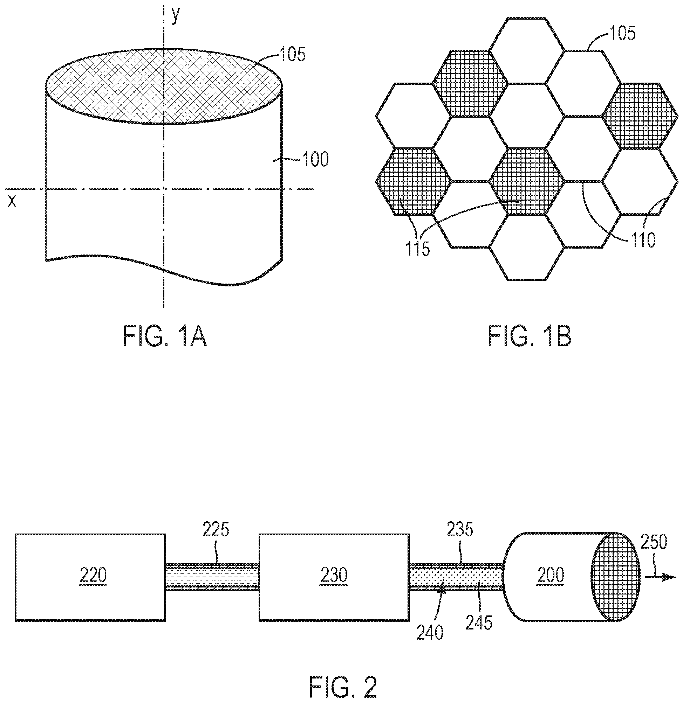

In certain embodiments, the porous ceramic structure may have a honeycomb shape, e.g., comprising a plurality of parallel channels or cells. The cellular geometry of the honeycomb configuration is often used for filtration due to its high surface area per unit volume for increased deposition of particulate matter. Such a honeycomb structure **100** comprising a plurality of channels **105** is illustrated in **FIG. 1A. FIG. 1B** illustrates a cross-sectional view of a portion of the honeycomb **100** of **FIG. 1A** taken along its x-axis. As shown in the cross-section, the honeycomb structure **100** can comprise a plurality of interior walls **110** separating and defining the plurality of channels **105.** Additionally, as depicted in **FIG. 1B****,** one or more of the channels **105** can comprise plugs **115,** which can be used to direct or increase fluid flow through the interior channel walls **110.**

Of course, the honeycomb structure depicted in **FIGS. 1A-B** is exemplary only and is not to be construed as limiting in any manner on the appended claims. For example, while the honeycomb **100** is depicted with channels **105** having a substantially hexagonal cross-section (e.g., in a plane perpendicular to the y axis), it is to be understood that the channels can have any suitable geometry, for example, circular, square, triangular, rectangular, or sinusoidal cross-sections, or any combination thereof. Additionally, although the honeycomb **100** is depicted as substantially cylindrical in shape, it is to be understand that such shape is exemplary only and the porous ceramic structure can have any variety of shapes including, but not limited to, spherical, oblong, pyramidal, cubic, or block shapes, to name a few. Furthermore, while the specific channels **105** are indicated as comprising plugs **115,** it is to be understood that the plugs may be arranged in any given fashion, e.g. alternating fashion or any other arrangement, as appropriate for a desired fluid flow pattern and/or pressure drop.

Honeycomb filters are often described in terms of cells (or channels) per square inch of surface area, as well as interior wall thickness (10⁻³ inches). Thus, a honeycomb comprising 300 cells/in² and a wall thickness of 0.008 inches would be labeled as a 300/8 honeycomb, and so forth. Exemplary honeycombs may comprise from about 100 to about 500 cells/in² (15.5-77.5 cells/cm²), such as from about 150 to about 400 cells/in² (23.25-62 cells/cm²), or from about 200 to about 300 cells/in² (31-46.5 cells/cm²), including all ranges and subranges therebetween. According to additional embodiments, the interior wall thickness can range from about 0.005 to about 0.02 inches (127-508 microns), such as from about 0.006 to about 0.015 inches (152-381 microns), from about 0.007 to about 0.012 inches (177-305 microns), or from about 0.008 to about 0.01 inches (203-254 microns), e.g., about 5 x 10⁻³, 6 x 10⁻³, 7 x 10⁻³, 8 x 10⁻³, 9 x 10⁻³, 10 x 10⁻³, 12 x 10⁻³, 14 x 10⁻³, 16x 10⁻³, 18 x 10⁻³, or 20 x 10⁻³ inches, including all ranges and subranges therebetwen.

Typical honeycomb filter lengths and/or diameters can range from one to several inches, such as from about 1 inch to about 12 inches (2.54-30.48 cm), from about 2 inches to about 11 inches (5.08-27.94 cm), from about 3 inches to about 10 inches (7.62-25.4 cm), from about 4 inches to about 9 inches (10.16-22.86 cm), from about 5 inches to about 8 inches (12.7-20.32 cm), or from about 6 inches to about 7 inches (15.24-17.78 cm), including all ranges and subranges therebetween. The total volume of such honeycombs can range, in some embodiments, from about 0.1 L to about 20 L, such as from about 0.5 L to about 18 L, from about 1 L to about 16 L, from about 2 L to about 14 L, from about 3 L to about 12 L, from about 4 L to about 10 L, or from about 5 L to about 8 L, including all ranges and subranges therebetween.

The composition of exemplary porous ceramic structures may vary as desired and may include, for example, any compositions suitable for use DPFs or GPFs. Exemplary materials include a variety of porous ceramics including, but not limited to, cordierite, silicon carbide, silicon nitride, aluminum titanate, eucryptite, calcium aluminate, zirconium phosphate, spodumene, and the like. The filter may, in certain embodiments, comprise an outer skin forming a porous outer surface of the filter and an interior core comprising walls defining a porous microstructure (e.g., a plurality of channels). The material forming the outer skin and interior walls may be the same or different and, in some embodiments, the outer skin may have a thickness different than the interior wall thickness. The outer skin may, in some embodiments, have a porosity different than that of the interior walls, e.g., can be made of a different material or can be made of the same material with a higher or lower porosity. In various exemplary embodiments, the skin may be extruded and/or molded together with the core of the honeycomb. In other exemplary embodiments, the skin may be a separate structure wrapped around the outside of the core and fired together with the core to create a ceramic structure.

As noted above, suitable porous ceramic structures can comprise flow-through, wall-flow, or partial-flow configurations. Wall-flow and partial-flow can be achieved, for instance, by plugging one or more passages (or channels) extending through the structure. For example, alternating channels may be blocked with plugs at opposite ends to promote fluid flow through the porous interior wall structure. Pressure build-up within end-blocked channels may force the fluid to pass through the porous wall(s) to a channel that is not blocked, such that any particulate matter in the fluid is trapped by the walls while the fluid is configured to pass through unobstructed. Plugs may be made of any suitable material and may include, for example, a mixture of ceramic (e.g., cordierite, aluminum titanate, calcium aluminate, etc.) with binders, fillers, and/or solvents (e.g., fibers, silica sol, methyl cellulose, water, etc.). In certain embodiments, the plugs may be cured by heating.

According to certain non-limiting embodiments, the porous ceramic structure can have a median pore size (d₅₀) of less than about 30 microns, such as ranging from about 8 microns to about 30 microns, from about 10 microns to about 25 microns, or from about 15 microns to about 20 microns, including all ranges and subranges in between, e.g., about 8, 9, 10, 11, 12, 13, 14, 15, 16, 17, 18, 19, 20, 21, 22, 23, 24, 25, 26, 27, 28, 29, or 30 microns. For instance, the d₅₀ value can range from about 12 microns to about 23 microns, such as from about 13 microns to about 22 microns, from about 14 microns to about 21 microns, from about 15 microns to about 20 microns, from about 16 microns to about 19 microns, or from about 17 microns to about 18 microns, including all ranges and subranges therebetween. Additionally, in some embodiments, it may be desirable to limit the number of larger pores in the ceramic structure, e.g., such that pores greater than 30 microns make up less than about 10% of the total porosity (d₉₀ = 30 microns). For example, pores greater than 30 microns may make up less than about 8%, less than about 5%, or less than about 2% of the total porosity. In various embodiments, the d₉₀ value can range from about 20 microns to about 50 microns, such as from about 25 microns to about 40 microns, or from about 30 microns to about 35 microns, including all ranges and subranges therebetween. Similarly, according to certain embodiments, it may be desirable to limit the number of smaller pores in the ceramic structure, e.g., such that pores less than 5 microns make up less than about 10% of the total porosity (d₁₀ = 5 microns). For example, pores smaller than 5 microns may make up less than about 8%, less than about 5%, or less than about 2% of the total porosity. In various embodiments, the d₁₀ value can range from about 3 microns to about 15 microns, such as from about 4 microns to about 14 microns, from about 5 microns to about 12 microns, from about 6 microns to about 11 microns, from about 7 microns to about 10 microns, or from about 8 microns to about 9 microns, including all ranges and subranges therebetween.

Porous ceramic structures disclosed herein can, in some embodiments, comprise a catalyst wash coat on one or more surfaces of the structure, e.g., on interior wall(s) and/or on the outer surface (e.g., skin) of the structure. Suitable wash coats can include one or more catalysts chosen from platinum group metals, such as Pt, Pd, Rh, Ir, and the like. These metals can be used alone or in combination with rare earth oxides such as CeO₂ and ZrO₃, to name a few.

### Filtration Systems

Disclosed herein are particulate filtration systems comprising a fuel source comprising at least one fuel additive; a fuel burner in fluid connection with the fuel source; and a porous ceramic structure in fluid connection with the fuel burner, wherein an exhaust stream comprising particulate matter from the fuel burner is configured to pass through the porous ceramic structure, wherein the at least one fuel additive comprises at least one inorganic component that produces ash upon combustion, and wherein the at least one fuel additive is capable of producing at least about 10 mg of ash per liter of fuel burned, such as at least about 30 mg, at least about 50 mg, or even as high as about 2000 mg of ash per liter of fuel burned.

As illustrated in **FIG. 2****,** a fuel source **220** comprising at least one fuel additive (not shown) can be placed in fluid connection with a fuel burner **230,** e.g., by way of conduit **225.** The fuel source **220** can flow into the fuel burner **230** by way of conduit **225,** where it may be combusted, e.g., to produce heat and/or energy. The fuel burner may be in fluid communication with a porous ceramic structure **200,** e.g., by way of conduit **235.** An exhaust stream **240** from the fuel burner **230** may comprise particulate matter **245** and can pass into the porous ceramic structure **200** for filtration. A purified stream **250** comprising a reduced amount of particulate matter **245** can then flow out of the porous ceramic structure **200,** e.g., into the surrounding atmosphere.

Exemplary fuel sources **220** can comprise, for instance, liquid fuels such as diesel or gasoline, natural gas, biofuel, and combinations thereof. In certain non-limiting embodiments, the fuel source **220** can comprise diesel or gasoline fuel, e.g., energy sources conventionally used to power vehicles. As used herein, the term "fuel" is intended to interchangeably refer to both diesel and gasoline fuel of any grade. It is noted that oil may also be burned along with the fuel source for various engines, e.g., oil used to lubricate the engine may be combusted along with the gasoline or diesel. However, "fuel additive" as used herein is not intended to refer to a component added to a lubricating oil but, rather, a component added to the fuel source generating the motive force of the vehicle (or the power of any other device or apparatus). In some embodiments, a separate additive may be added to the oil or such an additive may be omitted altogether, as desired.

The fuel source can be contained, for example, in a fuel reservoir, such as a gas tank in a vehicle. According to various embodiments, the fuel source **220** can have a volume ranging from about 1 liter to about 500 liters, such as from about 5 liters to about 400 liters, from about 10 liters to about 300 liters, from about 20 liters to about 250 liters, from about 30 liters to about 200 liters, from about 40 liters to about 150 liters, or from about 50 liters to about 100 liters, including all ranges and subranges therebetween. For example, the fuel source volume can correspond to the volume of a vehicle fuel tank, e.g., ranging from about 30 liters to about 150 liters, such as from about 40 liters to about 140 liters, from about 50 liters to about 130 liters, from about 60 liters to about 120 liters, from about 70 liters to about 110 liters, or from about 80 liters to about 100 liters, including all ranges and subranges therebetween. In still further embodiments, the fuel source **220** can correspond to an initial fuel supply for a vehicle, e.g., the first tank of gas added to a vehicle for combustion by the engine.

The fuel source **220** can comprise at least one fuel additive, for example, one or more additives comprising at least one inorganic component that produces ash upon combustion. Ash can comprise, for instance, non-combustible inorganic components, which may be in the form of oxides, sulfates, carbonates, or phosphates, to name a few. Exemplary fuel additives can include compounds comprising at least one metallic element including, but not limited to, Si, Al, Sn, Zn, Ti, Ce, Fe, Ca, Mn, Mg, Pb, Sr, V, Y, Zr, Cr, Mo, W, Co, Cu, Sn, Pr, or combinations thereof, such as metals or oxides, hydroxides, salts, and/or hydrates thereof. Ash resulting from such additives can thus comprise at least one oxide, sulfate, carbonate, and/or phosphate of Si, Al, Sn, Zn, Ti, Ce, Fe, Ca, Mn, Mg, Pb, Sr, V, Y, Zr, Cr, Mo, W, Co, Cu, Sn, Pr, or combinations thereof. In certain embodiments, a fuel additive can include fuel borne catalysts (FBCs). A non-limiting example of a commercially available fuel additive is EOLYS™ 176, which is a mixture of cerium and iron oxides in an isoparaffin solvent.

According to various embodiments, the at least one fuel additive may be present in the fuel source in an amount sufficient to produce at least about 10 mg of ash per liter of fuel burned. Exemplary fuel additive concentrations can produce, for instance, from about 10 mg to about 2000 mg of ash per liter of fuel burned, such as from about 30 mg to about 1800 mg, from about 40 mg to about 1500 mg, from about 50 mg to about 1200 mg, from about 100 mg to about 1000 mg, from about 150 mg to about 750 mg, from about 200 mg to about 500 mg, from about 250 mg to about 400 mg, or from about 300 mg to about 350 mg of ash per liter of fuel burned. In certain embodiments, the fuel additive can produce greater than about 10 mg, such as greater than about 30 mg, or greater than about 50 mg of ash per liter of fuel burned. According to still further embodiments, the fuel source **220** can comprise a mixture of a fuel supply (e.g., diesel or gasoline) and at least one fuel additive. A volumetric ratio between the at least one fuel additive and the fuel supply ranges from about 1:25 to about 1:500, such as from about 1:50 to about 1:400, from about 1:75 to about 1:300, or from about 1:100 to about 1:200, including all ranges and subranges therebetween.

Fuel borne catalysts (FBCs), such as EOLYS™ 176, have been added to fuel in relatively low concentrations for purposes of filter regeneration. However, FBCs are typically added to the fuel source in small concentrations, e.g., only as much as is necessary to lower the combustion temperature of particulate matter trapped in the filter such that it burns off more easily, without adding appreciably to the soot/ash load already present on the filter. For example, diesel particulate matter can burn at temperatures above 600°C, which can be lowered to about 350-400° by the addition of a small amount of FBC. Exemplary FBC concentrations include, for instance, a volumetric ratio of less than 1:1000 relative to the fuel source volume (e.g., 1:1500 or 1:2000), and producing less than 10 mg of ash per liter of fuel burned. Additionally, FBCs may be added to a fuel source to treat an "unclean" filter that is already loaded with particulate matter and in need of regeneration, e.g., having an ash concentration greater than about 0 g/L. In contrast, the instantly described fuel additives may be added to an initial fuel supply, e.g., to provide an initial ash deposit on a "clean" particulate filter having an ash concentration of about 0 g/L, thereby quickly improving the initial PNFE of the filter.

In certain embodiments, the at least one fuel additive may be present in amounts sufficient to deposit at least about 10 mg/L of ash on at least a portion of a surface of the porous ceramic structure, as measured relative to the total volume of the porous ceramic structure. Exemplary ash concentrations deposited in and/or on the porous ceramic structure can range, for instance, from greater than about 10 mg/L to about 1 g/L, such as from about 30 mg/L to about 0.9 g/L, from about 40 mg/L to about 0.8 g/L, from about 50 mg/L to about 0.7 g/L, from about 0.1 g/L to about 0.6 g/L, from about 0.2 g/L to about 0.5 g/L, or from about 0.3 g/L to about 0.4 g/L, including all ranges and subranges therebetween. In certain embodiments, the deposited ash concentrations can be greater than about 1 g/L, such as greater than about 2 g/L, greater than about 3 g/L, greater than about 4 g/L, or greater than about 5 g/L, including all ranges and subranges therebetween.

The term "surface" is used herein to refer to any exterior or interior surface of a ceramic structure including, but not limited to, any surfaces formed by pores and/or channels on both the external structure wall or skin and the interior microstructure or interior porous walls. For example, a membrane comprising inorganic particles may be deposited on at least a portion of a porous interior wall surface of the porous ceramic structure. The membrane may, in some embodiments, be continuous, discontinuous, or semi-continuous. In other embodiments, the membrane may cover or partially cover at least a portion of the pores within the ceramic structure. For example, an inorganic membrane can cover the pores on the outer wall surface, e.g., pore "openings" or can extend into the ceramic microstructure via one or more pore "necks." The deposited ash can thus cover one or more pore opening and/or line one or more pore channels, thereby increasing the filtration efficiency of the filter such that an increased amount of particulates may be trapped during fluid flow through the porous ceramic structure.

Fluids flowing through the porous ceramic structure can include, for example, an exhaust stream from the fuel burner **230.** An exemplary fuel burner can include, but is not limited to, an internal combustion engine or any part thereof. For example, the porous ceramic structure can be installed in a vehicle, either downstream of the engine or in the engine itself, in fluid communication with a fuel burning component such that an exhaust stream resulting from the combustion of the fuel source is configured to pass through the porous ceramic structure. In non-limiting embodiments, a fluid stream flow rate through the porous ceramic structure can range from about 0.1 L/hr to about 25 L/hr, from about 0.25 L/hr to about 20 L/hr, from about 0.5 L/hr to about 15 L/hr, from about 1 L/hr to about 10 L/hr, from about 2 L/hr to about 5 L/hr, or from about 3 L/hr to about 4 L/hr, including all ranges and subranges therebetween.

According to various embodiments, the fuel burner **230** may not be a vehicle component and the fuel source **220** may be other than a vehicle fuel supply. For example, in some embodiments, the porous ceramic structure **200** may be pre-conditioned prior to installation in a vehicle. In some embodiments, the porous ceramic structure **200** may first be placed in fluid communication with a pre-conditioning fuel burner combusting a fuel source comprising the at least one fuel additive. After a sufficient combustion period, e.g., after a desired ash concentration and/or filtration efficiency has been achieved (such as the exemplary levels disclosed herein), the pre-conditioned filter may be subsequently installed in a vehicle. Accordingly, the porous ceramic structure may be installed in a vehicle either as a "clean" filter with an initial ash concentration of about 0 mg/L or as a "pre-conditioned" filter with an initial ash concentration of at least about 10 mg/L or more, such as at least about 30 mg/L, or at least about 50 mg/L. In certain embodiments, a "clean" filter may be conditioned after installation in a vehicle, such as by exposure to exhaust from the engine combusting a fuel source as disclosed herein. In certain embodiments, conditioning of a filter may occur within about 72 hours or less of engine operation.

### Vehicles

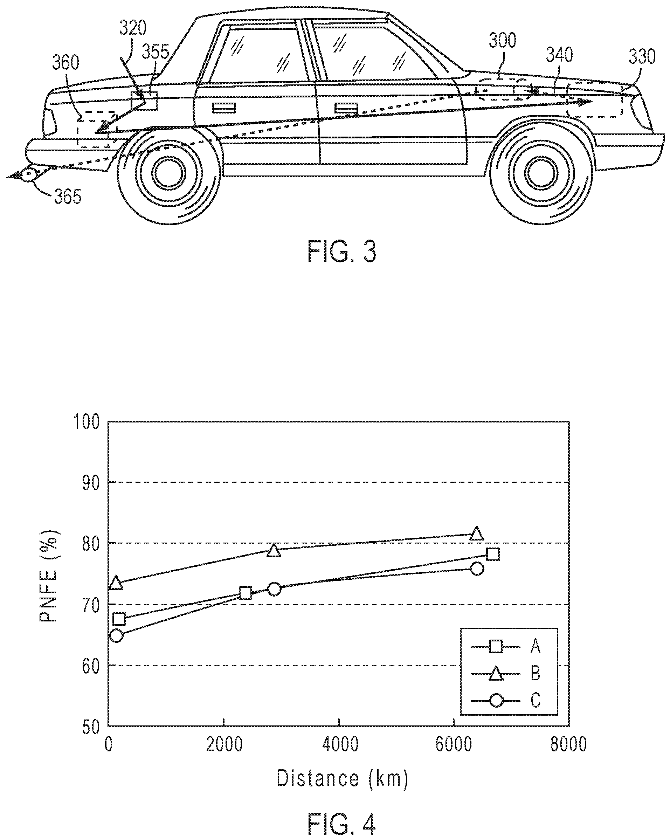

The disclosure also relates to vehicles comprising the particulate filtration systems disclosed herein. Referring to **FIG. 3****,** in some embodiments, a vehicle may comprise a fuel inlet **355** for receiving fuel **320** comprising a fuel additive (fuel flow indicated by solid arrows). The fuel **320** may be stored in a fuel tank **360** before being injected into and combusted by internal combustion engine **330.** An exhaust stream **340** (indicated by dashed arrows) exiting the engine **330** can then flow through a porous ceramic structure **300** for filtration of particulate matter prior to exiting the vehicle, e.g., through an exhaust pipe **365.** Of course, while **FIG. 3** may depict a passenger vehicle, such as a car or truck, it is also possible that the particulate filtration systems disclosed herein can be installed in any other moving vehicle, such as a commercial vehicle (e.g., semi, delivery, and/or construction trucks), a military vehicle, a train, boat, plane, or any other like moving vehicle that may or may not have regulated emissions. Furthermore, while **FIG. 3** depicts the engine **330** and porous ceramic structure **300** as separate components, it is also possible that the internal combustion engine may comprise both the fuel burner and the ceramic structure, e.g., a fuel burning engine sub-assembly and an exhaust filtering engine sub-assembly.

According to additional embodiments, the fuel **320** may comprise an initial fuel supply, e.g., a first tank of gas with a predetermined amount of the fuel additive. In further embodiments, after combustion of the initial fuel supply comprising the fuel additive, subsequent fuel supplies may be free or substantially free of the fuel additive. Alternatively, subsequent fuel supplies may include lower concentrations of fuel additive, e.g., concentrations sufficient for filter regeneration, such as less than about 25 ppm or even less than about 10 ppm or a concentration producing less than 10 mg of ash per liter of fuel burned.

In certain non-limiting embodiments, a vehicle comprising the particulate filtration systems disclosed herein may have a PNFE greater than about 80% after an initial "break-in" period, e.g., after a driving distance of about 3000 km or less. For instance, the PNFE may be greater than about 80% after a driving distance ranging from about 100 km to about 3000 km, such as from about 200 km to about 2500 km, from about 300 km to about 2000 km, from about 400 km to about 1500 km, from about 500 km to about 1000 km, from about 600 km to about 900 km, or from about 700 km to about 800 km, including all ranges and subranges therebetween. The PNFE after such driving distances may, in some embodiments, be greater than about 85%, greater than about 90%, greater than about 92%, greater than about 95%, greater than about 97%, greater than about 98%, or greater than about 99%, including all ranges and subranges therebetween.

Without wishing to be bound by theory, it is believed that the improved filtration efficiency over driving distances below 3000 km may be due to the rapid deposition of ash on at least a portion of a surface of the porous ceramic structure. For example, ash may be deposited on or in the structure at a rate of at least about 10 mg of ash per liter of fuel combusted, such as at least about 30 mg, at least about 50 mg, or even as high as about 2000 mg of ash per liter of fuel combusted. In some embodiments, after a driving distance of 3000 km or less, e.g., ranging from about 100 km to about 3000 km, at least about 10 mg/L of ash may be deposited on at least a portion of a surface of the porous ceramic structure, such as at least about 30 mg/L or at least about 50 mg/L, wherein the concentration is based on a total volume of the porous ceramic structure. Exemplary ash loading concentrations during the initial 3000 km driving period can range, for example, from greater than about 10 mg/L to about 1 g/L or greater, e.g., as high as about 5 g/L.

In non-limiting embodiments, ash may be deposited on a surface of the porous ceramic structure to form an inorganic membrane having a thickness of about 20 microns or less, such as ranging from about 10 nm to about 15 microns, from about 100 nm to about 12 microns, from about 200 nm to about 10 microns, from about 300 nm to about 8 microns, from about 400 nm to about 6 microns, from about 500 nm to about 5 microns, from about 600 nm to about 4 microns, from about 700 nm to about 3 microns, from about 800 nm to about 2 microns, or from about 900 nm to about 1 micron, including all ranges and subranges therebetween. The porosity of the inorganic membrane may, in various embodiments, be greater than or equal to about 70%, such as greater than about 75%, 80%, 85%, 90%, 95%, or greater, including all ranges and subranges therebetween, e.g., ranging from about 70% to about 95%.

Vehicles comprising the particulate filtration systems disclosed herein may exhibit one or more advantages over vehicles comprising prior art filtration systems. For example, **FIG. 4** depicts the PNFE evolution for prior art filters having different diameters and installed in different gasoline-burning vehicles running either the New European Driving Cycle (NEDC) or the World-Harmonized Light-Duty Vehicle Test Procedure (WLTP). Plot **A** represents a vehicle fitted with a 5.2" diameter 300/8 GC HP Corning® DuraTrap® filter running the WLTP. Plot **B** represents a vehicle fitted with a 5.66" diameter 300/8 GC HP Corning® DuraTrap® filter running the WLTP. Plot **C** represents a vehicle fitted with the same filter as in plot **B,** but running the NEDC. As can be appreciated from the graph, such prior art filtration systems do not exhibit an appreciable improvement in PNFE until the vehicles have been driven for a significant distance, e.g., greater than 3000 km, or even greater than 6000 km. Some filters may not even reach 80% PNFE depending on the vehicle and driving cycle. As such, it is apparent that prior art filtration systems not employing a fuel additive as disclosed herein, and which may instead rely on accumulation of ash deposits from inorganic components in the engine oil, either cannot reach certain PNFE levels or cannot do so reliably or predictably. In contrast, particulate filtration systems as disclosed herein can both achieve higher PNFE and can do so much more reliably due to the more predictable nature of gasoline consumption and the ability to more accurately calculate the resulting ash deposits resulting from the fuel additive.

In some embodiments, particulate filtration systems disclosed herein can exhibit at least about a 5% improvement in PNFE as compared to a similar filtration system run in a similar vehicle on the same driving cycle, but instead comprising an unconditioned porous ceramic structure (e.g., all other conditions and characteristics being equal except for the lack of a fuel additive in the fuel source as disclosed herein). For example, the filtration systems disclosed herein may exhibit a PNFE improvement ranging from about 5% to about 20% as compared to prior art filtration systems (e.g., about 5%, 6%, 7%, 8%, 9%, 10%, 11%, 12%, 13%, 14%, 15%, 16%, 17%, 18%, 19%, 20%, or any range or subrange therebetween). In some embodiments, this improvement in PNFE may be exhibited at mileages of about 3000 km or less, such as 1000 km or less, e.g., ranging from about 10 km to about 1000 km, from about 20 km to about 500 km, from about 50 km to about 300 km, or from about 100 km to about 200 km, including all ranges and subranges therebetween. In other embodiments, the PNFE improvement may be an overall improvement without limitations on driving distance.

Filtration systems disclosed herein may further provide improved filtration efficiency while also exhibiting a relatively low initial pressure drop. As used herein, the term "pressure drop" refers to the resulting pressure drop of a fluid as it flows through the porous ceramic structure, from the inlet end to the outlet end. Pressure drop values provided herein refer to the "initial" pressure drop of the filter, e.g., the first pass through the filter before it becomes loaded with particulates. It is understood that pressure drop across a filter naturally tends to increase as the filter becomes increasingly loaded with particulate matter. In some embodiments, the pressure drop of the porous ceramic structure may be range from about 0.1 kPa to about 100 kPa, such as from about 0.5 kPa to about 50 kPa, from about 1 kPa to about 40 kPa, from about 5 kPa to about 30 kPa, or from about 10 kPa to about 20 kPa. According to further embodiments, the pressure drop may be less than about 50 kPa, such as less than about 40 kPa, less than about 30 kPa, less than about 20 kPa, or less than about 10 kPa, e.g., ranging from about 10 kPa to about 50 kPa, including all ranges and subranges therebetween. For example, the filtration systems disclosed herein may exhibit a pressure drop improvement ranging from about 1% to about 30% as compared to prior art filtration systems (e.g., about 1%, 2%, 3%, 4%, 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30% or any range or subrange therebetween).

Additionally, due to the presence of a relatively thin inorganic layer or membrane, it may also be possible to reduce pressure drop caused by the deposition of soot particles. For example, because the deposited ash particles can penetrate deep into the porous ceramic structure, it may be possible to prevent subsequent penetration of soot particles into some portions of the microstructure. As such, it may be possible to reduce or eliminate the "knee effect" (referring to a disproportionately high flow resistance increase at relatively low soot loads) which might otherwise be observed for soot loaded pressure drop.

### Methods

Disclosed herein are methods for filtering particulates from a fluid are further disclosed herein, the methods comprising flowing the fluid through a particulate filtration system as disclosed herein. Also disclosed herein are methods for conditioning a particulate filter, the methods comprising placing a porous ceramic structure in fluid connection with a fuel burner; supplying a fuel source comprising at least one fuel additive to the fuel burner; combusting the fuel source; and passing an exhaust stream comprising particulate matter from the fuel burner through the porous ceramic structure, wherein the at least one fuel additive comprises at least one inorganic component that produces ash upon combustion, and wherein the at least one fuel additive is capable of producing at least about 10 mg of ash per liter of fuel burned, such as at least about 30 mg, at least about 50 mg, or even as high as 2000 mg of ash per liter of fuel burned.

As used herein, the term "fluid connection" is intended to denote that a described fluid can freely flow into described component, or that a fluid can freely flow between two described components. For instance, a fuel source in fluid connection with a fuel burner can flow freely, e.g., via a conduit, pipe, tube, or other suitable component, into the fuel burner for combustion. Similarly, an exhaust stream exiting a fuel burner in fluid connection with a porous ceramic structure can flow freely, e.g., via a conduit, pipe, tube, or other suitable component, into the porous structure for filtration.

As discussed in detail above, a particulate filter (e.g., a porous ceramic structure) can be conditioned either after installation in a vehicle or prior to installation. For instance, an exemplary conditioning method can include installing the porous ceramic structure in a vehicle, including at least one fuel additive in an initial fuel supply for the vehicle, combusting the fuel supply to produce ash, and flowing an exhaust stream from the engine through the porous ceramic structure to deposit the ash on one or more surfaces of the structure. In such embodiments, a "clean" filter (e.g., ash concentration ∼0 mg/L) can be installed in a vehicle and subsequently conditioned to achieve a desired ash concentration (e.g., > 10 mg/L) and PNFE over a relatively short driving distance (e.g., < 3000 km and/or < 72 hours of engine operation). For example, at least one fuel additive can be added to an initial fuel supply for the vehicle.

In various embodiments, the filter can be conditioned by exposure to exhaust from the engine for less than about 72 hours of engine operation, such as less than about 60 hours, less than about 48 hours, less than about 36 hours, less than about 24 hours, or less than about 12 hours, including all ranges and subranges therebetween, for instance, ranging from about 12 to about 72 hours. As used herein, "engine operation" is intended to encompass any operation generating exhaust, including idling, driving at any speed, and the like. A filter thus conditioned, e.g., after exposure to engine exhaust for less than about 72 hours, may have an ash loading of at least about 10 mg/L, such as at least about 30 mg/L, or at least about 50 mg/L, based on the total volume of the filter. In certain embodiments, the filter may be conditioned with an "accelerated" ash loading rate as compared to a "natural" ash loading that may occur during normal operation of a vehicle.

Alternatively, prior to installation in a vehicle, a porous ceramic structure can be pre-conditioned, e.g., by combusting at least one fuel additive and passing an exhaust stream comprising the resulting ash particles through the porous ceramic structure until a desired ash concentration level is achieved. In these embodiments, a "pre-conditioned" filter can be installed in a vehicle (e.g., ash concentration > 10 mg/L) and may immediately exhibit the desired PNFE. For instance, a fuel additive may not be added to an initial fuel supply for the vehicle or, in some embodiments, smaller amounts of fuel additive can be added for purposes of filter regeneration.

In certain embodiments, the conditioning methods disclosed herein can further comprise wash coating the porous ceramic structure with at least one catalyst. Exemplary catalysts can include one or more platinum group metals (e.g., Pt, Pd, Rh, Ir) optionally combined with one or more rare earth oxides (e.g., CeO₂ or ZrO₃). It is within the ability of one skilled in the art to select an appropriate catalyst, as well as an appropriate catalyst concentration, and to apply such a catalyst to one or more surfaces of the porous ceramic structure using any method known in the art. According to non-limiting embodiments, it may be advantageous to perform the wash coating step prior to deposition of the ash particles to avoid any potential interference the new filtration layer may have with the wash coating process.

In some embodiments, methods and/or systems are disclosed herein for conditioning a particulate filter such as a DPF or GPF that do not necessitate a slow ash conditioning process and/or that do not negatively impact the filter properties, either before or during use. Also, some embodiments disclosed herein provide low pressure drop filters (e.g., thinner webs and/or larger pores) having enhanced initial filtration efficiencies. Further, some embodiments disclosed herein comprise methods and/or systems for shortening the conditioning time of a particulate filter such as a DPF or GPF such that vehicles or engine systems or after-treatment subsystems employing such filters can more quickly comply with emissions standards.

It will be appreciated that the various disclosed embodiments may involve particular features, elements or steps that are described in connection with that particular embodiment. It will also be appreciated that a particular feature, element or step, although described in relation to one particular embodiment, may be interchanged or combined with alternate embodiments in various non-illustrated combinations or permutations.

It is also to be understood that, as used herein the terms "the," "a," or "an," mean "at least one," and should not be limited to "only one" unless explicitly indicated to the contrary. Thus, for example, reference to "a channel" includes examples having one such "channel" or two or more such "channels" unless the context clearly indicates otherwise. Similarly, a "plurality" or an "array" is intended to denote two or more, such that an "array of channels" or a "plurality of channels" denotes two or more such channels.

Ranges can be expressed herein as from "about" one particular value, and/or to "about" another particular value. When such a range is expressed, examples include from the one particular value and/or to the other particular value. Similarly, when values are expressed as approximations, by use of the antecedent "about," it will be understood that the particular value forms another aspect. It will be further understood that the endpoints of each of the ranges are significant both in relation to the other endpoint, and independently of the other endpoint.

All numerical values expressed herein are to be interpreted as including "about," whether or not so stated, unless expressly indicated otherwise. It is further understood, however, that each numerical value recited is precisely contemplated as well, regardless of whether it is expressed as "about" that value. Thus, "a dimension less than 100 nm" and "a dimension less than about 100 nm" both include embodiments of "a dimension less than about 100 nm" as well as "a dimension less than 100 nm."

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that any particular order be inferred.

While various features, elements or steps of particular embodiments may be disclosed using the transitional phrase "comprising," it is to be understood that alternative embodiments, including those that may be described using the transitional phrases "consisting" or "consisting essentially of," are implied. Thus, for example, implied alternative embodiments to a method comprising A+B+C include embodiments where a method consists of A+B+C, and embodiments where a method consists essentially of A+B+C.

It will be apparent to those skilled in the art that various modifications and variations can be made to the present disclosure. Since modifications combinations, sub-combinations and variations of the disclosed embodiments incorporating the substance of the disclosure may occur to persons skilled in the art, the disclosure should be construed to include everything within the scope of the appended claims.

The following Examples are intended to be non-restrictive and illustrative only, with the scope of the invention being defined by the claims.

### EXAMPLES

A standard EU5 certified vehicle with a 4-cylinder 1.6L turbo charged GDI engine was fueled with regular gasoline and tested for raw emissions without a particulate filter installed. The same vehicle was then equipped with a Corning® DuraTrap® GC HP 300/8 catalyst coated ceramic filter and emission tested using regular gasoline. Finally, a fuel additive (EOLYS™ 176) was added to the fuel in a ratio of 1:75 by volume and the vehicle followed by emission testing. Emission testing was carried out on a chassis dynamometer using the NEDC EU5/EU6b certification cycle using Particle Measurement Programme (PMP) compliant particulate number measurement equipment.

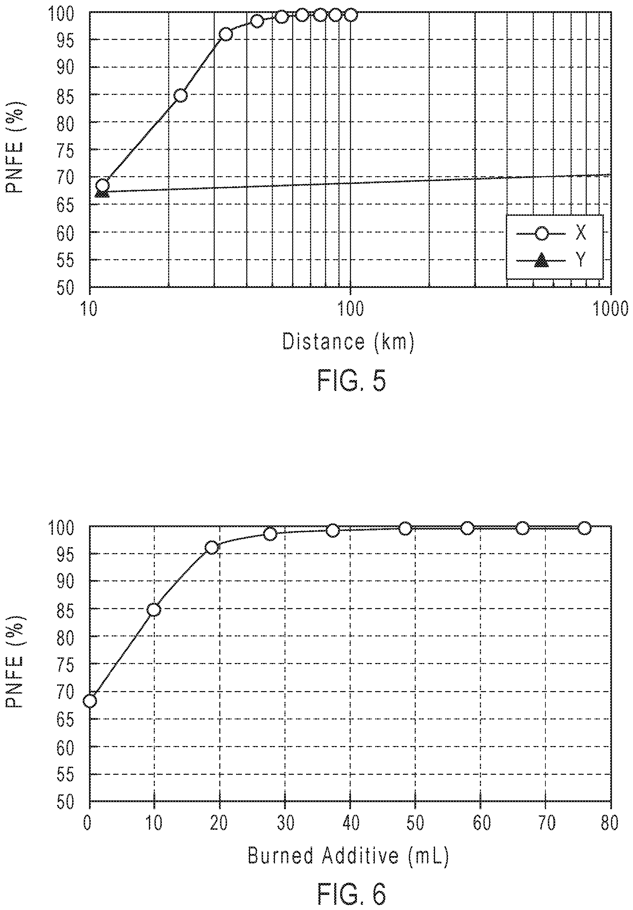

To evaluate the evolution of PNFE as a function of driving distance, the NEDC was repeated several times consecutively (1 cycle = 11 km) with emissions measurements conducted at regular intervals. Filtration efficiency was calculated as [PN(engine out)-PN(tailpipe)]/PN(engine out), wherein PN(engine out) represents the particle number of the exhaust stream as it exits the engine and PN(tailpipe) represents the particle number after it has passed through the filter. The results of the testing with and without fuel additive are shown in **FIG. 5****,** where plot **X** represents the PNFE evolution of the inventive filtration system while plot **Y** represents a prior art filtration system (no fuel additive). Each data point is representative of a separate emissions test. As can be appreciated by comparing the two plots **X** and **Y,** the inventive filtration system had a superior overall PNFE and particularly outperformed the prior art system at shorter driving distances. Based on the data presented in **FIG. 5****,** it may be possible to certify a vehicle operating a filtration system disclosed herein before the vehicle is driven as few as 1000 km, as few as 500 km, as few as 100 km, as few as 50 km, or even as few as 20 km.

**FIG. 6** demonstrates the observed PNFE evolution as a function of the quantity of fuel additive (EOLYS™ 176) consumed by the same vehicle tested in **FIG. 5****.** Even with relatively small volumes of additive, e.g., at volumetric ratios as low as 1:75, a significant enhancement in PNFE was observed. The data presented in **FIG. 6** can be generated for any given fuel additive and subsequently used to determine an appropriate "dose" of fuel additive to achieve a desired filtration effect.

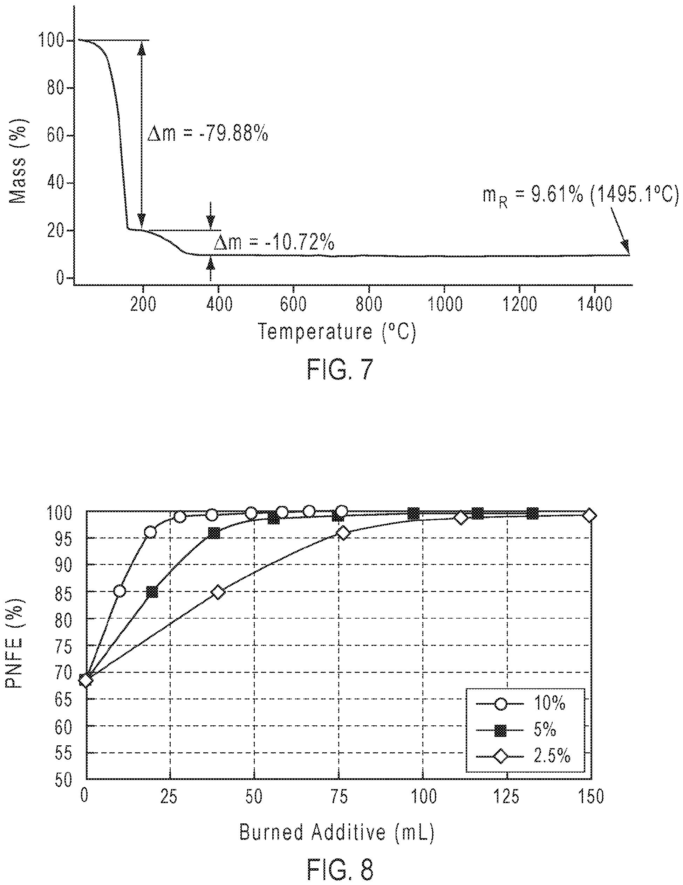

A study of the relative amount of ash in the fuel additive EOLYS™ 176 was conducted using thermogravimetric analysis (TGA) and is depicted in **FIG. 7****.** Heating of the liquid additive was carried out at increasing temperatures until no further change in mass was observed. Two general stages of mass decrease Δ**m** were observed at temperatures up to about 400°C. After heating to approximately 1500°C, no further mass loss was apparent, yielding a residual mass **m_{R}** of about 10 wt%, which represents the ash fraction of the fuel additive. Using this and other similar analyses for other fuel additive components may allow for the design of a particulate filtration system that achieves a desired PNFE at a desired mileage.

For example, referring to **FIG. 8****,** using different ash fractions, one can calculate the required amount of additive for a given amount of fuel source, e.g., for a given fuel tank size. Of course, other parameters to consider may include the target increase in PNFE (which can depend on raw emission numbers), the filter volume (assuming larger filters may require higher ash levels). Furthermore, care should be taken not to poison the catalyst wash coat, if present, and/or to produce or increase secondary emissions which may likewise be regulated (e.g., THC, CO, NOx, PM/PN).

The fuel additive may be capable of producing at least about 30 mg of ash per liter of fuel burned.

The ash produced by combustion of the fuel additive may be deposited on at least a portion of a surface of the porous ceramic structure.

The ash may form a membrane on at least a portion of a porous interior wall surface of the porous ceramic structure.

The ash may comprise at least one oxide, sulfate, carbonate, or phosphate of Si, Al, Sn, Zn, Ti, Ce, Fe, Ca, Mn, Mg, Pb, Sr, V, Y, Zr, Cr, Mo, W, Co, Cu, Sn, Pr, or combinations thereof.

The ash may be deposited in a concentration of at least about 10 mg/L, based on the total volume of the porous ceramic structure.

The fuel source may comprise diesel or gasoline fuel. In some of these embodiments, the fuel source volume may range from about 30 liters to about 150 liters.

The at least one inorganic component may comprise at least one element chosen from Si, Al, Sn, Zn, Ti, Ce, Fe, Ca, Mn, Mg, Pb, Sr, V, Y, Zr, Cr, Mo, W, Co, Cu, Sn, Pr, and combinations thereof.

The fuel burner may be an internal combustion engine.

The porous ceramic structure may be a ceramic honeycomb comprising a plurality of channels separated by a plurality of porous interior walls.

The porous ceramic structure may be coated with at least one catalyst.

An initial ash concentration of the porous ceramic structure may be approximately 0 mg/L.

A vehicle may comprise the particulate filtration system. The fuel source may comprise an initial fuel supply to the vehicle. After a driving distance of about 3000 km or less, an inorganic membrane comprising at least about 10 mg/L of ash may be formed on at least a portion of a surface of the porous ceramic structure, wherein the concentration is based on a total volume of the porous ceramic structure. After a driving distance of about 3000 km or less, a particle number filtration efficiency of the porous ceramic structure may be greater than about 80%, and in some of these embodiments, after a driving distance ranging from about 100 km to about 1000 km, a particle number filtration efficiency of the porous ceramic structure may be greater than about 80%, and in some of these embodiments, the particle number filtration efficiency may be greater than about 90%.

A method for filtering particulates from a fluid is disclosed herein , the method comprising flowing the fluid through the particulate filtration system of the first aspect.

In a fourth aspect, a method for conditioning a particulate filter is disclosed herein, the method comprising: placing a porous ceramic structure in fluid connection with a fuel burner; supplying a fuel source comprising at least one fuel additive to the fuel burner; combusting the fuel source; and
passing an exhaust stream comprising particulate matter from the fuel burner through the porous ceramic structure, wherein the at least one fuel additive comprises at least one inorganic component that produces ash upon combustion, and wherein the at least one fuel additive is capable of producing at least about 10 mg of ash per liter of fuel burned.

The at least one fuel additive may be capable of producing at least about 30 mg of ash per liter of fuel burned.

The method may further comprise installing the porous ceramic structure in a vehicle and including the at least one fuel additive in an initial fuel supply for the vehicle.

The porous ceramic structure may be pre-conditioned prior to installation in a vehicle.

The porous ceramic structure may a ceramic honeycomb comprising a plurality of channels separated by a plurality of porous interior walls.

The ash produced by combustion of the fuel additive may be deposited on at least a portion of a surface of the porous ceramic structure.

The ash may be deposited in a concentration of at least about 10 mg/L, based on the total volume of the porous ceramic structure.

The ash may form a membrane on at least a portion of a porous interior wall surface of the porous ceramic structure.

The method may further comprise coating the porous ceramic structure with a catalyst prior to placing it in fluid connection with the fuel burner.

A vehicular system is disclosed herein, the vehicular system comprising: an engine; and an engine exhaust treatment subsystem comprising a filter; wherein the filter comprises ash at an ash loading of at least about 10 mg/L based on a total volume of the filter, the ash comprising an inorganic residue of a fuel additive, and wherein the filter has been exposed to exhaust from the engine for less than about 72 hours of engine operation.

An exhaust filtration system is disclosed herein comprising: a filter comprising ash at an ash loading of at least about 10 mg/L based on a total volume of the filter, the ash comprising an inorganic residue of a fuel additive, wherein the filter has been exposed to exhaust from an engine for less than about 72 hours of engine operation.

A method of supplying filters to a vehicle manufacturer or to an engine exhaust system manufacturer, the method comprising: conditioning, or preconditioning, a filter by accelerating ash loading in the filter.

The conditioning, or preconditioning, may comprise: combusting fuel that contains a fuel additive, wherein the combusting generates an exhaust stream comprising ash derived from the fuel additive; and passing the exhaust stream through the filter to trap the ash in the filter. In some of these embodiments, the ash derived from the fuel additive comprises an inorganic residue of the fuel additive. In some embodiments, the ash loading of the filter after conditioning is at least about 10 mg/L based on a total volume of the filter.

## Claims

1. Use of a fuel additive for accelerating ash loading of a particulate filter, the use comprising:
placing a porous ceramic structure (200, 300) in fluid connection with a fuel burner (230);
supplying a fuel source (220) comprising the fuel additive to the fuel burner (230), wherein the fuel source (220) comprises a fuel supply combined with the fuel additive, and wherein a volumetric ratio of the fuel additive to the fuel supply ranges from 1:25 to 1:500;
combusting the fuel source (220); and
passing an exhaust stream (240, 340) comprising particulate matter from the fuel burner (230) through the porous ceramic structure (200, 300),
wherein the fuel additive comprises at least one inorganic component that produces ash upon combustion,
wherein the fuel additive is a mixture of cerium and iron oxides in an isoparaffin solvent, and
wherein the fuel additive is capable of producing at least 10 mg of ash per liter of fuel burned.

2. The use of claim 1, wherein the fuel additive is capable of producing at least 30 mg of ash per liter of fuel burned.

3. The use of any of claims 1-2, comprising installing the porous ceramic structure (200, 300) in a vehicle and including the fuel additive in an initial fuel supply for the vehicle.

4. The use of any of claims 1-3, wherein the porous ceramic structure (200, 300) is pre-conditioned prior to installation in a vehicle.

5. The use of any of claims 1-4, wherein the porous ceramic structure (200, 300) is a ceramic honeycomb (100) comprising a plurality of channels (105) separated by a plurality of porous interior walls (110).

6. The use of any of claims 1-5, wherein the ash produced by combustion of the fuel additive is deposited on at least a portion of a surface of the porous ceramic structure (200, 300).

7. The use of any of claims 1-6, wherein the ash forms a membrane on at least a portion of a porous interior wall surface of the porous ceramic structure (200, 300).

8. The use of any of claims 1-7, comprising coating the porous ceramic structure (200, 300) with a catalyst prior to placing it in fluid connection with the fuel burner (230).

9. The use of claim 8, wherein the coating of the porous ceramic structure (200, 300) with a catalyst is a wash coating with a catalyst including one or more platinum group metals.

10. The use of claim 9, wherein the one or more platinum group metals are combined with one or more rare earth oxides.

11. The use of any of claims 9 or 10, wherein the wash coating is performed prior to deposition of the ash particles.

12. The use of any of claims 1-11, wherein an initial ash concentration of the porous ceramic structure (200, 300) is approximately 0 mg/L.

13. The use of any of claims 1-12, wherein the fuel source comprises gasoline fuel.

## Patentansprüche

1. Verwendung eines Brennstoffzusatzes zum Beschleunigen einer Aschebeladung eines Partikelfilters, die Verwendung Folgendes umfassend:
Anordnen einer porösen Keramikstruktur (200, 300) in Fluidverbindung mit einem Brennstoffbrenner (230);
Zuführen einer Brennstoffquelle (220), die den Brennstoffzusatz umfasst, an den Brennstoffbrenner (230), wobei die Brennstoffquelle (220) eine Brennstoffzufuhr umfasst, die mit dem Brennstoffzusatz kombiniert ist, und wobei ein volumetrisches Verhältnis des Brennstoffzusatzes zu der Brennstoffzufuhr zwischen 1:25 und 1:500 liegt;
Verbrennen der Brennstoffquelle (220); und
Durchlassen eines Abgasstroms (240, 340), der Feststoffpartikel aus dem Brennstoffbrenner (230) umfasst, durch die poröse Keramikstruktur (200, 300),
wobei der Brennstoffzusatz mindestens eine anorganische Komponente enthält, die bei Verbrennung Asche produziert,
wobei der Brennstoffzusatz eine Mischung aus Cer- und Eisenoxiden in einem Isoparaffin-Lösemittel ist, und
wobei der Brennstoffzusatz in der Lage ist, mindestens 10 mg Asche pro Liter des verbrannten Brennstoffs zu produzieren.

2. Verwendung nach Anspruch 1, wobei der Brennstoffzusatz in der Lage ist, mindestens 30 mg Asche pro Liter des verbrannten Brennstoffs zu produzieren.

3. Verwendung nach einem der Ansprüche 1 bis 2, Installieren der porösen Keramikstruktur (200, 300) in einem Fahrzeug und Einbeziehen des Brennstoffzusatzes in eine anfängliche Brennstoffzufuhr für das Fahrzeug umfassend.

4. Verwendung nach einem der Ansprüche 1 bis 3, wobei die poröse Keramikstruktur (200, 300) vor einer Installation in ein Fahrzeug vorkonditioniert ist.

5. Verwendung nach einem der Ansprüche 1 bis 4, wobei die poröse Keramikstruktur (200, 300) eine Keramikwabenstruktur (100) ist, die mehrere Kanäle (105) umfasst, die durch mehrere poröse Innenwände (110) separiert sind.

6. Verwendung nach einem der Ansprüche 1 bis 5, wobei die Asche, die durch Verbrennung des Brennstoffzusatzes produziert wird, auf mindestens einem Abschnitt einer Oberfläche der porösen Keramikstruktur (200, 300) abgelagert wird.

7. Verwendung nach einem der Ansprüche 1 bis 6, wobei die Asche eine Membran auf mindestens einem Abschnitt einer porösen Innenwandoberfläche der porösen Keramikstruktur (200, 300) ausbildet.

8. Verwendung nach einem der Ansprüche 1 bis 7, Beschichten der porösen Keramikstruktur (200, 300) vor ihrem Anordnen in Fluidverbindung mit dem Brennstoffbrenner (230) mit einem Katalysator umfassend.

9. Verwendung nach Anspruch 8, wobei das Beschichten der porösen Keramikstruktur (200, 300) mit einem Katalysator ein Washcoating mit einem Katalysator ist, der ein oder mehrere Metalle der Platin-Gruppe enthält.

10. Verwendung nach Anspruch 9, wobei das eine oder die mehreren Metalle der Platin-Gruppe mit einem oder mehreren Seltenerdoxiden kombiniert sind.

11. Verwendung nach einem der Ansprüche 9 oder 10, wobei das Washcoating vor der Ablagerung der Aschepartikel durchgeführt wird.

12. Verwendung nach einem der Ansprüche 1 bis 11, wobei eine anfängliche Aschekonzentration der porösen Keramikstruktur (200, 300) ungefähr 0 mg/L ist.

13. Verwendung nach einem der Ansprüche 1 bis 12, wobei die Brennstoffquelle Benzinbrennstoff umfasst.

## Revendications

1. Utilisation d'un additif pour carburant pour accélérer la charge de cendres d'un filtre à particules, l'utilisation comprenant :
la placement d'une structure céramique poreuse (200, 300) en liaison fluidique avec un brûleur de carburant (230) ;
l'alimentation d'une source de carburant (220) comprenant l'additif pour carburant au brûleur de carburant (230), dans laquelle la source de carburant (220) comprend une alimentation en carburant combinée avec l'additif pour carburant et dans laquelle un rapport volumétrique de l'additif pour carburant sur l'alimentation en carburant va de 1 : 25 à 1 : 500 ;
la combustion de la source de carburant (220) ; et
le passage d'un flux d'échappement (240, 340) comprenant des matières particulaires en provenance du brûleur de carburant (230) à travers la structure céramique poreuse (200, 300),
dans laquelle l'additif pour carburant comprend au moins un composant inorganique qui produit des cendres lors de la combustion,
dans laquelle l'additif pour carburant est un mélange d'oxydes de cérium et de fer dans un solvant d'isoparaffine et
dans laquelle l'additif pour carburant est capable de produire au moins 10 mg de cendres par litre de carburant brûlé.

2. Utilisation selon la revendication 1, dans laquelle l'additif pour carburant est capable de produire au moins 30 mg de cendres par litre de carburant brûlé.

3. Utilisation selon l'une quelconque des revendications 1 à 2, comprenant l'installation de la structure céramique poreuse (200, 300) dans un véhicule et incluant l'additif pour carburant dans une alimentation en carburant initiale pour le véhicule.

4. Utilisation selon l'une quelconque des revendications 1 à 3, dans laquelle la structure céramique poreuse (200, 300) est préconditionnée avant l'installation dans un véhicule.

5. Utilisation selon l'une quelconque des revendications 1 à 4, dans laquelle la structure céramique poreuse (200, 300) est un nid d'abeilles en céramique (100) comprenant une pluralité de canaux (105) séparés par une pluralité de parois intérieures poreuses (110) .

6. Utilisation selon l'une quelconque des revendications 1 à 5, dans laquelle les cendres produites par la combustion de l'additif pour carburant sont déposées sur au moins une partie d'une surface de la structure céramique poreuse (200, 300).

7. Utilisation selon l'une quelconque des revendications 1 à 6, dans laquelle les cendres forment une membrane sur au moins une partie d'une surface de paroi intérieure poreuse de la structure céramique poreuse (200, 300).

8. Utilisation selon l'une quelconque des revendications 1 à 7, comprenant le revêtement de la structure céramique poreuse (200, 300) avec un catalyseur avant de la placer en liaison fluidique avec le brûleur de carburant (230).

9. Utilisation selon la revendication 8, dans laquelle le revêtement de la structure céramique poreuse (200, 300) avec un catalyseur est un revêtement de lavage ayant un catalyseur incluant un ou plusieurs métaux du groupe du platine.

10. Utilisation selon la revendication 9, dans laquelle le ou les métaux du groupe du platine sont combinés avec un ou plusieurs oxydes de terres rares.

11. Utilisation selon l'une quelconque des revendications 9 et 10, dans laquelle le revêtement de lavage est réalisé avant le dépôt des particules de cendres.

12. Utilisation selon l'une quelconque des revendications 1 à 11, dans laquelle une concentration initiale de cendres de la structure céramique poreuse (200, 300) est approximativement 0 mg/L.

13. Utilisation selon l'une quelconque des revendications 1 à 12, dans laquelle la source de carburant comprend de l'essence.
